Europäisches Patentamt

European Patent Office

Office européen des brevets

(19)

(11) Numéro de publication : **0 053 552**
**B1**

(12) ## FASCICULE DE BREVET EUROPÉEN

(45) Date de publication du fascicule du brevet :
03.04.85

(21) Numéro de dépôt : **81401877.6**

(22) Date de dépôt : **26.11.81**

(51) Int. Cl.⁴ : **G 21 C 13/00**

(54) **Bâtiment réacteur comportant un puits de cuve ancré dans une dalle bloquée à sa périphérie.**

(30) Priorité : **28.11.80 FR 8025304**

(43) Date de publication de la demande :
**09.06.82 Bulletin 82/23**

(45) Mention de la délivrance du brevet :
**03.04.85 Bulletin 85/14**

(84) Etats contractants désignés :
**BE CH DE FR GB IT LI**

(56) Documents cités :
**DE-A- 1 965 850**
**FR-A- 2 226 729**
**FR-A- 2 427 446**
**GB-A- 1 084 064**

(73) Titulaire : **Framatome**
**Tour Fiat 1 place de la Coupole**
**F-92400 Courbevoie (FR)**

(72) Inventeur : **Hista, Jean-Claude**
**17, Avenue de la Maye**
**F-78000 Versailles (FR)**

(74) Mandataire : **Mongrédien, André et al**
**c/o BREVATOME 25, rue de Ponthieu**
**F-75008 Paris (FR)**

EP 0 053 552 B1

Jouve, 18, rue St-Denis, 75001 Paris, France

## Description

L'invention concerne un bâtiment réacteur constitué par une enceinte de confinement à l'intérieur de laquelle sont positionnées des structures internes, l'enceinte de confinement se composant d'une jupe cylindrique fermée à sa partie supérieure par un dôme et s'élevant sur un radier dit radier général, les structures internes se composant d'un radier dit radier des structures internes, d'un cylindre de béton dit puits de cuve, situé sensiblement au centre du radier des structures internes et de casemates entourant le puits de cuve, la jupe cylindrique étant raccordée au radier général par une partie basse en déterminant une cuvette à fond plat dans laquelle sont positionnées lesdites structures internes.

L'enceinte de confinement a pour but d'éviter toute fuite de substance radioactive en cas d'accident et de résister aux effets de pression et de température résultant d'une rupture éventuelle des circuits primaire ou secondaire. Son étanchéité est assurée par un revêtement métallique en acier doux, appelé encore peau.

On connaît (FR-A-2 226 729) un bâtiment réacteur correspondant au préambule de la revendication 1. Ce bâtiment est constitué par une enceinte de confinement à l'intérieur de laquelle sont positionnées des structures internes. L'enceinte de confinement se compose d'une jupe cylindrique fermée à sa partie supérieure par un dôme s'élevant sur une fondation de béton. Les structures internes se composent d'un radier, d'un cylindre de béton situé au centre du radier et de casemates entourant le puits de cuve. La jupe cylindrique est raccordée à la fondation de béton constituant un radier général par une partie basse qui détermine une cuvette à fond plat dans laquelle sont positionnées les structures internes.

Le radier qui supporte les structures internes comporte un bossage circulaire situé sous le puits de cuve. Ce bossage est engagé dans un évidement correspondant pratiqué dans la fondation de béton.

On connaît également des bâtiments réacteurs dans lesquels le blocage des structures internes par rapport au radier général est obtenu en bridant la base du puits de cuve au moyen de butées mécaniques. Ces butées mécaniques sont ancrées dans une dalle en béton qui repose sur le radier général. La dalle en béton comporte un évidement dans la partie centrale de sa face inférieure. Un bossage circulaire de forme complémentaire réalisé dans le radier général s'engage dans l'évidement de la dalle de béton. L'étanchéité de l'enceinte de confinement est assurée par un revêtement métallique en acier doux. Ce revêtement suit le décrochement du bossage réalisé dans le radier général.

Ainsi, dans ces bâtiments réacteurs connus, on obtient le blocage de la dalle par rapport au radier général, et par suite, le blocage du puits de cuve et des structures internes par rapport au radier général. Cependant, ces systèmes sont d'une réalisation complexe. D'autre part, ils rendent délicate la réalisation du revêtement étanche. En outre, les structures internes ne peuvent pas se dilater librement à partir du puits de cuve par rapport à l'enceinte de confinement.

L'invention, telle qu'elle est caractérisée dans les revendications, remédie à ces inconvénients. Elle résout le problème consistant à créer un bâtiment réacteur de réalisation aisée, dans lequel la réalisation du revêtement étanche ne présente pas de difficulté et dans lequel les structures internes peuvent se dilater librement à partir du puits de cuve par rapport à l'enceinte de confinement.

Les avantages obtenus grâce à cette invention consistent en ceci que, en cas de séisme, tout déplacement horizontal entre le radier des structures internes et le radier général est évité. D'autre part, la libre dilatation des structures internes, à partir du puits de cuve, par rapport à l'enceinte de confinement est permise. Le revêtement métallique en acier doux est réalisé sur une surface plane. Il n'y a pas de décrochement du bossage dans le radier général. La réalisation de ce revêtement est simplifiée.

De préférence, la couche de glissement est réalisée au moyen de feuilles en polychlorure de vinyle gélifié aux huiles de chrysène et plastifié. Sa protection mécanique, lors de la réalisation du radier des structures internes est assurée par une chape non armée au mortier de ciment.

Ainsi, la réalisation du revêtement d'étanchéité de l'enceinte est rendue plus aisée, puisque le décrochement qui existait dans les dispositifs antérieurement connus est supprimé.

Les butées de centrage, de réalisation complexe, sont également supprimées, le blocage des structures internes s'effectuant contre la partie basse de la jupe par l'intermédiaire de la dalle buton.

Enfin, la couche de glissement permet une libre dilatation à partir du puits de cuve du radier des structures internes par rapport à la dalle buton.

La couche de glissement peut présenter par elle-même une résistance suffisante pour supporter le radier des structures internes. Selon une variante de réalisation on peut également prévoir des appuis disposés à la périphérie de la dalle buton, entre cette dernière et le radier des structures internes, ce qui permet d'utiliser pour la couche de glissement un matériau de caractéristiques mécaniques moins élevées.

D'autres caractéristiques et avantages de l'invention apparaîtront plus clairement à la lecture de la description qui suit, donnée à titre purement illustratif et nullement limitatif, en référence aux dessins annexés sur lesquels :

La figure 1 représente une vue en coupe de l'ensemble d'un bâtiment réacteur ;

La figure 2 représente une vue partielle en coupe du radier général et du radier des structures internes ;

La figure 3 représente une vue de détail d'un appui disposé à la périphérie de la dalle buton.

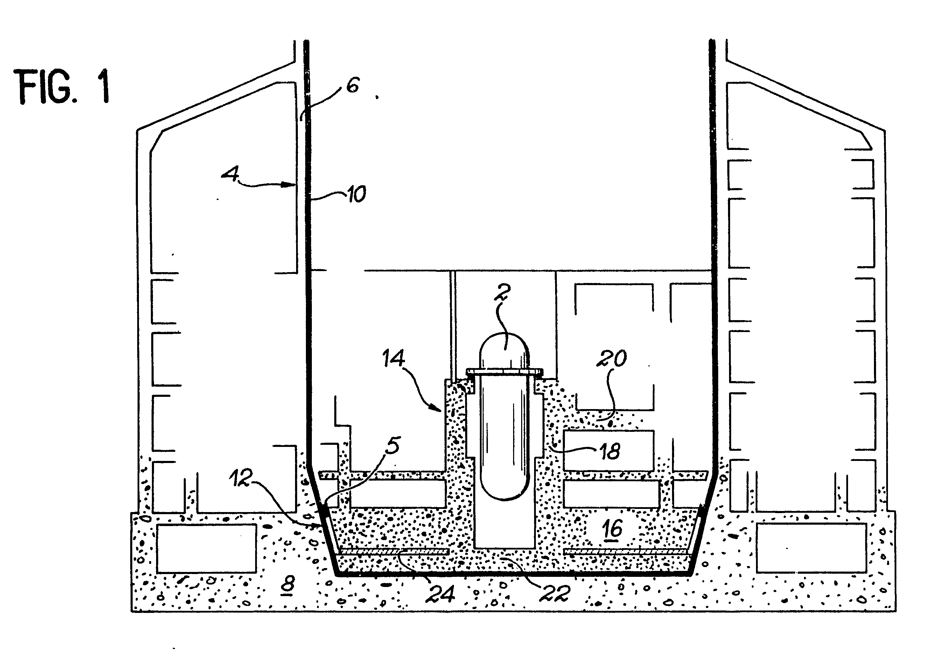

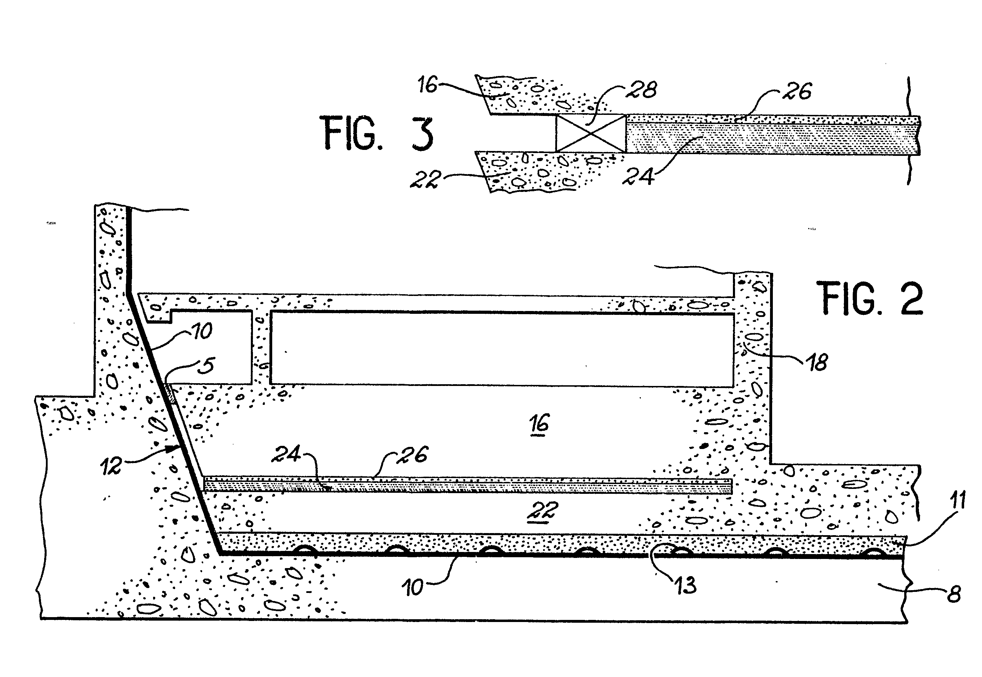

On a représenté sur la figure 1 une vue en coupe de l'ensemble d'un bâtiment de réacteur nucléaire. La cuve 2 du réacteur nucléaire est disposée à l'intérieur d'une enceinte de confinement désignée par la référence générale 4. Cette enceinte se compose d'une jupe cylindrique 6, d'un radier 8, dit radier général, et d'un dôme (non représenté) qui ferme l'enceinte à sa partie supérieure. L'étanchéité de l'enceinte de confinement 4 est assurée par un revêtement métallique 10 en acier doux appelé encore peau. La partie inférieure de la jupe cylindre 6 est raccordée au radier général 8. Ce raccordement peut prendre la forme d'un gousset tronconique 12 comme représenté sur les figures 1 et 2, mais peut également être de forme cylindrique. On détermine ainsi une cuvette à fond plat à l'intérieur de laquelle sont positionnées les structures internes. La partie du revêtement 10 disposée sur le radier général 8 ne présente ainsi aucun décrochement en niveau.

Les structures internes en béton, désignées par la référence 14 sont implantées dans l'enceinte de confinement 4 et servent de support principalement aux composants du circuit primaire. Elles se composent d'un radier 16, dit radier des structures internes, d'un cylindre de béton 18 dits puits de cuve support de la cuve 2 du réacteur, et situé sensiblement au centre du radier des structures internes 16, et de casemates 20 disposées de manière rayonnante par rapport au puits de cuve 18 dont elles sont solidaires. Les structures internes sont désolidarisées de l'enceinte de confinement 4 et un joint d'étanchéité 5 en styrène ou en une matière similaire, règne entre l'enceinte 4 et le parement supérieur du radier des structures internes 16. Conformément à l'invention, une dalle 22 dite dalle buton est disposée entre le radier général 8 et le radier des structures internes 16. La dalle buton 22 est bloquée à sa périphérie contre le gousset 12 de l'enceinte de confinement 4.

Le rôle de la dalle buton 22 est d'éviter en cas de séisme tout déplacement relatif horizontal entre le radier des structures internes et le radier général. Par contre, pour permettre la libre dilatation, à partir du puits de cuve 18, du radier des structures internes 16 sous l'action de son échauffement tant en fonctionnement normal qu'en cas d'accident, un joint horizontal 24 constitué par un produit de glissement est disposé en couronne à partir du puits de cuve 18 entre la dalle buton 22 et ce radier.

On a représenté sur la figure 2 une vue partielle en coupe du bâtiment réacteur représenté sur la figure 1.

Des canaux 13 enrobés dans une couche de béton de protection 11 permettent de contrôler les soudures de la peau d'étanchéité 10.

La couche de glissement 24 est disposée en couronne à partir du puits de cuve 18 entre la dalle buton 22 et le radier des structures internes 16. Cette couche de glissement peut être réalisée au moyen de feuilles en polychlorure de vinyle gélifié aux huiles de chrysène et plastifié. Une chape 26 non armée au mortier de ciment, coulée sur la couche de glissement 24, assure sa protection mécanique lors de la réalisation du radier des structures internes 16.

Les dispositions adoptées permettent de limiter la poussée d'origine thermique de la dalle buton 22 sur le gousset 12. En effet, exception faite de la partie située au droit du puits de cuve 18, la dalle buton 22 est isolée de l'atmosphère de l'enceinte de confinement 4 par le radier des structures internes 16.

D'autre part, la partie chaude de la dalle buton 22 située au droit du puits de cuve 18 a un diamètre moyen relativement faible par rapport au diamètre de contact entre la dalle buton 22 et le gousset 12. Enfin, l'épaisseur de la dalle buton 22 est aussi réduite que possible dans la limite permise par les efforts sismiques à transmettre.

Dans l'exemple de réalisation décrit en référence à la figure 2, le joint horizontal de glissement 24 peut présenter par lui-même une résistance mécanique suffisante, mais on peut également insérer des appuis 28 entre la dalle buton 22 et le radier des structures internes 16, comme représenté dans la variante de la figure 3.

Ces appuis, tout en permettant le mouvement horizontal relatif des structures internes 14 par rapport à la dalle buton 22, ont l'avantage d'assurer un positionnement précis des réactions d'appui du radier des structures internes 16 sur la dalle buton 22 et sur le radier général 8 ; d'améliorer la stabilité au séisme des structures internes 14, et d'utiliser un produit de glissement de caractéristiques mécaniques moins élevées, par exemple du polystyrène avec protection vinyl.

Selon un premier mode de réalisation, les appuis 28 sont des appuis métalliques glissants disposés à la périphérie de la dalle buton 22. Selon une variante de réalisation, les appuis 28 sont en élastomère fretté.

## Revendications

1. Bâtiment réacteur constitué par une enceinte de confinement (4) à l'intérieur de laquelle sont positionnées des structures internes (14), l'enceinte de confinement (4) se composant d'une jupe cylindrique (6) fermée à sa partie supérieure par un dôme et s'élevant sur un radier (8) dit radier général, les structures internes (14) se composant d'un radier (16) dit radier des structures internes, d'un cylindre de béton (18) dit puits de cuve, situé sensiblement au centre du radier des structures internes et de casemates entourant le puits de cuve, la jupe cylindrique (6) étant raccordée au radier général (8) par une partie basse (12) en déterminant une cuvette à fond plat dans laquelle sont positionnées lesdites structures internes, caractérisé en ce qu'une dalle (22) dite dalle buton est disposée entre le radier général (8) et le radier des structures internes (16), le puits de cuve (18) étant ancré dans la dalle buton, la dalle buton étant bloquée à sa périphérie contre la partie basse (12) de la jupe (6), un joint horizontal (24) constitué par un produit de glissement étant disposé en couronne à partir du puits de cuve (18) entre la dalle buton (22) et le radier des structures internes (16).

2. Bâtiment réacteur selon la revendication 1, caractérisé en ce que la couche de glissement (24) disposée entre la dalle buton (22) et le radier des structures internes (16) est réalisée au moyen de feuilles en polychlorure de vinyle gélifié aux huiles de chrysène et plastifié, une chape non armée au mortier de ciment (26) assurant sa protection mécanique lors de la réalisation du radier des structures internes (16).

3. Bâtiment réacteur selon la revendication 1, caractérisé en ce que les structures internes (14) reposent sur des appuis (28) disposés à la périphérie de la dalle buton (22), entre cette dernière et le radier des structures internes (16).

4. Bâtiment réacteur selon la revendication 3, caractérisé en ce que la couche de glissement (24) disposée entre la dalle buton (22) et le radier des structures internes (16) est réalisée au moyen de polystyrène muni d'une protection vinyl recouverte d'une chape non armée au mortier de ciment (26).

5. Bâtiment réacteur selon les revendications 3 et 4, caractérisé en ce que les appuis (28) disposés à la périphérie de la dalle buton sont en élastomère fretté.

6. Bâtiment réacteur selon les revendications 3 et 4, caractérisé en ce que les appuis (28) disposés à la périphérie de la dalle buton sont des appuis métalliques glissants.

## Claims

1. Reactor building comprising a confinement (4) in the interior of which are positioned internal structures (14), the confinement comprising a cylindrical skirt (6) closed at its top by a dome and raised on a general raft (8), the internal structures (14) comprising an internal-structure raft (16), a concrete cylinder (18) forming the tank pit, substantially located at the centre of the internal structure raft, and casemates surrounding the tank pit, the cylindrical skirt (6) being connected to the general raft (8) by a lower part (12) forming a flat-bottomed cell in which said internal structures are located, characterized in that a support slab (22) is located between the general raft (8) and the internal structure raft (16), the tank pit (18) being anchored in the support raft, and the support raft being held at its periphery against the lower part (12) of the skirt (6), a horizontal packing (24) comprising a low-friction material being disposed in a ring in the tank pit (18) between the support slab (22) and the internal structure raft (16).

2. Reactor building according to Claim 1, characterized in that the low friction layer (24) located between the support slab (22) and the internal structure raft (16) is formed from sheets of polyvinyl chloride gel plasticized with chrysene oil, a non-reinforced cement cap (26) providing mechanical protection during formation of the internal structure raft (16).

3. Reactor building according to Claim 1, characterized in that the internal structures (14) rest on bearing members (28) located at the periphery of the support slab (22) between the latter and the internal structure raft (16).

4. Reactor building according to Claim 3, characterized in that the low-friction layer (24) located between the support slab (22) and the internal structure raft (16) is formed from polystyrene with a vinyl cover, surmounted by a non-reinforced cement cap (26).

5. Reactor building according to Claims 3 and 4, characterized in that the bearings (28) located at the periphery of the support slab are formed from belted elastomeric materials.

6. Reactor building according to Claims 3 and 4, characterized in that the bearings (28) located at the periphery of the support slab are slidable metal bearings.

## Ansprüche

1. Reaktorgebäude, bestehend aus einer Sicherheitshülle (4), in deren Innerem innere Baulichkeiten (14) angeordnet sind und die aus einem zylinderförmigen Mantel (6) besteht, der an seinem oberen Teil durch eine Kuppel geschlossen ist und sich auf einem Fundament (8), Plattenfundament genannt, erhebt, wobei sich die inneren Baulichkeiten (14) aus einem Fundament (16), Fundament der inneren Baulichkeiten genannten, einem Betonzylinder (18), Kesselbehälter genannt und im wesentlichen in der Mitte des Fundaments der inneren Baulichkeiten angeordnet, und den Kesselbehälter umgebenden Sicherheitsräumen zusammensetzt, wobei der zylinderförmige Mantel (6) mit dem Plattenfundament (8) über einen unteren Teil (12) verbunden ist und eine Wanne mit flachem Boden bestimmt, in der die inneren Baulichkeiten positioniert sind, dadurch gekennzeichnet, daß eine Platte (22), Strebenplatte genannt, zwischen dem Plattenfundament (8) und dem Fundament (16) für die inneren Baulichkeiten angeordnet ist, daß der Kesselbehälter (18) in der Strebenplatten verankert ist, daß die Strebenplatte an ihrem Umfang gegen den unteren Teil (12) des Mantels (6) fixiert ist, daß eine horizontale, aus einem Gleitmaterial bestehende Packung (24) als Kranz von dem Kesselbehälter (18) ausgehend zwischen der Strebenplatte (22) und dem Fundament (16) für die inneren Baulichkeiten angeordnet ist.

2. Reaktorgebäude nach Anspruch 1, dadurch gekennzeichnet, daß die zwischen der Strebenplatte (22) und dem Fundament (16) für die inneren Baulichkeiten angeordnete Gleitschicht (24) aus Folien aus mit Chrysenölen geliertem und plastifiziertem Polyvinylchlorid hergestellt ist, daß eine nichtarmierte Zementmörtellage (26) deren mechanischen Schutz bei der Herstellung des Fundamentes (16) für die inneren Baulichkeiten sicherstellt.

3. Reaktorgebäude nach Anspruch 1, dadurch gekennzeichnet, daß die inneren Baulichkeiten (14) auf Stützen (28) ruhen, die am Umfang der Strebenplatte (22) zwischen dieser und dem Fundament (16) für die inneren Baulichkeiten angeordnet sind.

4. Reaktorgebäude nach Anspruch 3, dadurch gekennzeichnet, daß die zwischen der Strebenplatte (22) und dem Fundament (16) für die inneren Baulichkeiten angeordnete Gleitschicht (24) aus Polystyren hergestellt ist, welches mit einem Vinylschutz versehen ist, der mit einer nichtarmierten Zementmörtellage (26) bedeckt ist.

5. Reaktorgebäude nach Anspruch 3 oder 4, dadurch gekennzeichnet, daß die an dem Umfang der Strebenplatte angeordneten Stützen (28) aus einem bandagierten Elastomer bestehen.

6. Reaktorgebäude nach Anspruch 3 oder 4, dadurch gekennzeichnet, daß die an dem Umfang der Strebenplatten angeordneten Stützen (28) gleitende Metallstützen sind.

FIG. 1

FIG. 3

FIG. 2